(19) Europäisches Patentamt
European Patent Office
Office européen des brevets

(11) Publication number: 0 026 665
B1

(12) **EUROPEAN PATENT SPECIFICATION**

(45) Date of publication of patent specification: **05.09.84**

(21) Application number: **80303430.5**

(22) Date of filing: **29.09.80**

(51) Int. Cl.³: **C 09 J 3/14,** C 08 F 222/32, C 08 F 236/14 // (C08F236/14, 222/32),(C08F222/32, 236/14)

# (54) Quick-setting adhesive composition.

(30) Priority: **28.09.79 JP 125070/79**

(43) Date of publication of application:
**08.04.81 Bulletin 81/14**

(45) Publication of the grant of the patent:
**05.09.84 Bulletin 84/36**

(84) Designated Contracting States:
**DE FR GB**

(56) References cited:
**FR-A-2 010 589**
**FR-A-2 010 590**
**FR-A-2 388 034**
**US-A-3 316 227**

**INTERNATIONAL POLYMER SCIENCE AND TECHNOLOGY, vol. 4, no. 3, 1977, pages T/98 - T/102 Rubber and plastics research association of Great Britain Shawbury, G.B. N.N. TROFIMOV et al.: *"Properties and modification of cyanoacrylate adhesives"***

(73) Proprietor: **JAPAN SYNTHETIC RUBBER CO., LTD.**
**11-24, Tsukiji-2-chome Chuo-ku**
**Tokyo (JP)**

(72) Inventor: **Teramoto, Toshio**
**No. 104 of 1-To 29, Aobadai-2-chome**
**Midori-ku Yokohama (JP)**
Inventor: **Ijuin, Noriaki**
**1827, Ohzenji**
**Tama-ku Kawasaki-shi (JP)**
Inventor: **Kotani, Teizo**
**1865-126, Tokaichiba Midori-ku**
**Yokohama (JP)**

(74) Representative: **Tubby, David George et al**
**MARKS & CLERK 57-60 Lincoln's Inn Fields**
**London WC2A 3LS (GB)**

(56) References cited:
**The file contains technical information submitted after the application was filed and *not included in this specification***

EP 0 026 665 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

The present invention relates to a quick-setting (sometimes called "instant-setting") adhesive composition, which has better impact resistance, peel resistance, heat resistance and water resistance than are achievable with many conventional compositions of this type.

2-Cyanoacrylate adhesives are wellknown for use in quick-setting adhesive compositions. These adhesives are used for many purposes, since they are single-component liquid adhesives of the nonsolvent type having the specific property that they polymerize instantaneously at room temperature in the presence of the minute amount of water existing on the surfaces of the adherend materials (i.e. the materials to be adhered together) or in the air and will bond metals, plastics, rubbers and many other materials.

2-Cyanoacrylate adhesives, however, have unsatisfactory impact resistance, peel resistance, flexibility, heat resistance and water resistance and thus their use is restricted. For example, because of their low impact strength, they cannot be used, except for temporary bonding, in metal-to-metal bonding where the resulting bonds must have a high impact strength. Furthermore, a problem which arises in bonding together rubbers using 2-cyanoacrylate adhesives is that, owing to the lack of flexibility and peel resistance of the adhesive, the adhesive layer is unable to follow closely the deformation of the rubber, resulting in delamination.

Furthermore, the maximum temperature at which the bond strength of conventional 2-cyanoacrylate adhesives is acceptable in practice is 80°C and this does not meet the requirements for many purposes, for example adhering electrical and mechnaical parts.

In order to overcome these defects, considerable study of the 2-cyanoacrylate adhesives has been undertaken and many proposals have been made. For example, it has been proposed to improve the impact resistance by incorporation of various additives into the 2-cyanoacylate, as described in Japanese Patent Applications Kokai (i.e. as laid-open to public inspection) No. 146,445/67 and No. 35,743/78. These attempts, however, have not yet succeeded in sufficiently improving the performance of the resulting adhesives.

It has also been proposed to improve heat resistance by employing cross-linking monomers (as disclosed in Japanese Patent Applications Kokai No. 22,432/74, 22,433/74 and 94,722/74) or by using hydroxyacrylates (as disclosed in Japanese Patent Application Kokai No. 110, 635/78). Although these methods result in an appreciable improvement in the adhesive performance, they have not yet been successful in simultaneously improving the impact resistance to a satisfactory degree.

U.S. Patent Specification No. 3,316,227 describes a series of 1,1-disubstituted dienes and proposes the use of these compounds as adhesives. French patent specification No. 2,010,590 is concerned with a series of dienes similar to certain of those of the U.S. patent specification and specifically monomeric esters of 2-cyano-2,4-pentadienoic acid, in which the esters are esters with ethylenically unsaturated alcohols or with alcohols having alkoxy substituents. Such esters are said to be useful as adhesives. Example 6 of the French specification describes the use as adhesives of a number of compositions, including a mixture of equal weights of allyl $\alpha$-cyanoacrylate and ethyl 2-cyano-2,4-pentadienoate (alternative name: 1-carbethoxy-1-cyanobuta-1,3-diene), as well as a mixture of equal weights of allyl $\alpha$-cyanoacrylate and allyl 2-cyano-2,4-pentadienoate.

We have now surprisingly found that it is possible to obtain an adhesive composition in which the impact resistance, peel resistance, heat resistance and water resistance are markedly improved and the quick-setting property characteristic of the 2-cyanoacrylates remains unimpaired by the addition of certain specific 1,1-disubstituted dienes to the 2-cyanoacrylate.

Thus, the present invention provides a quick-setting adhesive composition comprising a 2-cyanoacrylate and at least one 1,1-disubstituted diene of formula

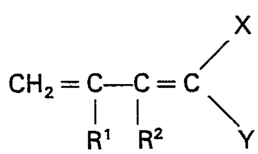

(in which:

$R^1$ represents a hydrogen atom, an alkyl group having from 1 to 5 carbon atoms, an aryl group, an aralkyl group or a halogen atom;

$R^2$ represents a hydrogen atom or an alkyl group having from 1 to 5 carbon atoms; and

X and Y are the same or different and each represents a cyano group, a carboxylate group having the formula ROOC— [in which R represents an alkyl group], an ethylsulphone group, a phenylsulphone group or a diethylphosphonyl group),

the total weight of said diene or dienes being from 60 to 95% by weight and the weight of said 2-cyanoacrylate being from 40 to 5% by weight, both based on the total weight of said 2-cyanoacrylate and said diene or dienes.

The 2-cyanoacrylates which may be used in the composition of the present invention include all

of the common esters of 2-cyanoacrylic acid. Specific examples of such esters include the methyl, ethyl, propyl, isopropyl, butyl, isobutyl, t-butyl, pentyl, hexyl, cyclohexyl, heptyl, octyl, 2-ethylhexyl, dodecyl, allyl, propargyl, benzyl, phenyl, 2-methoxyethyl, 2-ethoxyethyl, 2-chloroethyl, hexafluoroisopropyl, trifluoroethyl and 2-cyanoethyl 2-cyanoacrylates, A single one of these esters or a mixture of two or more thereof may be used.

In the formula of the 1,1-disubstituted dienes given above, it is preferred that $R^1$ represents a hydrogen atom or an alkyl group having 1 or 2 carbon atoms, that $R^2$ represents a hydrogen atom, that X represents a cyano group and that Y represents a carboxylate group, an ethylsulphone group or a diethylphosphonyl group. Specific examples of these dienes are 1-carbomethyoxy-1-cyanobuta-1,3-diene; 1-carbethoxy-1-cyanobuta-1,3-diene; 1-carbopropoxy-1-cyanobuta-1,3-diene; 1-carboisopropoxy-1-cyanobuta-1,3-diene; 1-carbobutoxy-1-cyanobuta-1,3-diene; 1-carboisobutoxy-1-cyanobuta-1,3-diene; 1-carbo-t-butoxy-1-cyanobuta-1,3-diene; 1,1-dicyanobuta-1,3-diene; 1,1-dicarbomethoxybuta-1,3-diene; 1,1-dicarbethoxybuta-1,3-diene; 1-cyano-1-ethylsulphonylbuta-1,3-diene; 1-benzenesulphonyl-1-cyanobuta-1,3-diene; 1-cyano-1-diethylphosphonobuta-1,3-diene; 1-carbethoxy-1-cyano-3-pentylbuta-1,3-diene, 1-carbethoxy-1-cyano-2-methylbuta-1,3-diene; 1-carbethoxy-1-cyano-3-phenylbuta-1,3-diene; 1,1-dicarbethoxy-3-methylbuta-1,3-diene and 1-carbethoxy-3-chloro-1-cyanobuta-1,3-diene. A single one of these dienes or a mixture of two or more may be used.

Particularly preferred 1,1-disubstituted dienes are: 1-carbomethoxy-1-cyanobuta-1,3-diene, 1-carbethoxy-1-cyanobuta-1,3-diene; 1-carbopropoxy-1-cyanobuta-1,3-diene; 1-carboisopropoxy-1-cyanobuta-1,3-diene; 1-carbobutoxy-1-cyanobuta-1,3-diene; 1-carboisobutoxy-1-cyanobuta-1,3-diene; 1-carbo-t-butoxy-1-cyanobuta-1,3-diene; 1-cyano-1-ethylsulphonylbuta-1,3-diene; 1-cyano-1-diethylphosphonobuta-1,3-diene; 1-carbethoxy-1-cyano-2-methylbuta-1,3-diene and mixtures thereof.

These dienes can be synthesized, as described in US Patent Specification No. 3,316,227, by the reaction of an $\alpha,\beta$-unsaturated carbonyl compound (e.g. acrolein) with an active methylene compound (e.g. ethyl cyanoacetate) in the presence of, as catalyst, a metal salt.

The amount of 1,1-disubstituted diene employed in the composition of the invention is within the range from 60 to 95% by weight, preferably from 65 to 85% by weight, based on the total weight of the 2-cyano-acrylate and the 1,1-disubstituted diene or dienes. Provided that the amount of 1,1-disubstituted diene employed is within this range, the resulting composition has substantially higher peel strength than do compositions where the amount of diene is outside this range, although the reason for this has not been discovered. Moreover, where the amount of 1,1-disubstituted diene is too low, the resulting composition will have a low impact resistance and insufficient increase in water resistance and heat resistance, compared with similar compositions where the amount of diene is within the range from 60 to 95% by weight.

In order to examine this phenomenon more closely, a mixture of ethyl 2-cyanocrylate and 1-carboisopropoxy-1-cyanobuta-1,3-diene was allowed to polymerize autogenously into a hardened product, which was then observed under an electron microscope, using osmium tetroxide to dye black the diene phase. The resulting electron micrographs are shown in Figures 1 and 2 of the accompanying drawings. These are believed to show that a polymer was formed, not by random polymerization, but, most unexpectedly, by block copolymerization. Comparing Figure 1 (in which the weight ratio of diene to 2-cyanoacrylate was 70:30) with Figure 2 (in which the ratio was 30:70) the occurrence of a phase transition between the diene phase (dyed black with osmium tetroxide) and the white, undyed 2-cyanoacrylate phase is evident. From these observations, it is presumed that the critical concentration for the phase transition is just over 50% by weight of diene (based on the total weight of 2-cyanoacrylate and diene) and that when the diene phase becomes the matrix, the adhesive layer is placed under the control of the diene phase, resulting in a rapid increase in peel strength. As a result, the peel strength reaches a maximum at a diene concentration within the range from 60 to 95% by weight and thereafter decreases as the diene concentration increases further. The upper limit on the diene concentration is 95% by weight (based on the total weight of 2-cyanoacrylate and diene or dienes).

The peel strength and tensile shear strength of the quick-setting adhesive composition of the present invention may be further improved by the addition of certain types of lactone. Preferred lactones are monocyclic, bicyclic or condensed-ring lactones having a 4- to 7- membered lactone ring. These are saturated or unsaturated compounds and preferably have from 3 to 20, more preferably from 3 to 10, carbon atoms and may have various substituents, for example alkyl groups, aryl groups, aralkyl groups, cycloalkyl groups or carboxylate groups. Specific examples of such lactones include: $\beta$-propiolactone; $\beta$-pivalolactone; $\gamma$-butyrolactone; 3-carbethoxy-$\gamma$-butyrolactone; 5-ethyl-$\gamma$-butyrolactone; phthalide; $\delta$-valerolactone; coumarin; dihydroxycoumarin; $\varepsilon$-caprolactone; heptodilactone; and dimethylheptodilactone. One or more of these lactones may be added to the mixture of 2-cyanoacrylate and 1,1-disubstituted diene. The amount of lactone added is preferably from 0.1 to 30 parts by weight, more preferably from 0.5 to 10 parts by weight, per 100 parts by weight of the mixture of 2-cyanoacrylate and 1,1-disubstituted diene(s). If the amount of lactone exceeds 30 parts by weight, the tensile shear strength will sometimes be decreased.

Conventional 2-cyanoacrylate adhesives generally incorporate stabilizers, thickeners, plasticizers, colouring agents, perfumes, hardening promoters and similar materials. These also may be added to the quick-setting adhesive composition of the present invention. Stabilizers (such as sulphur dioxide,

sulphonic acids, sulphones, lactone-boron trifluoride, hydroquinone, hydroquinone monomethyl ether, catechol, pyrogallol or similar compounds) are preferably added in an amount of from 1 to 1,000 ppm. It is also possible to incorporate, as a thickener, such polymers as methyl methacrylate polymers, 2-cyanoacrylate polymers, acryl rubbers and polymers of those 1,1-disubstituted dienes which form part of the quick-setting adhesive composition of the invention. If these polymers are used, they are preferably employed in an amount of 50 parts by weight per 100 parts by weight of the quick-setting adhesive composition of the invention. If necessary, plasticizers such as dioctyl phthalate, sebacates, and phosphoric esters may be added in order to improve the flexibility further.

A radical-generating agent may be incorporated into the composition of the invention; although the composition exhibits sufficiently good heat resistance in the absence of such a radical-generating agent, the presence of up to 10% by weight of such an agent will promote the formation of a 3-dimensional structure in the hardened polymer of the adhesive layer, leading to a further improvement in heat resistance. Effective radical-generating agents are chiefly organic peroxides, typical examples of which are benzoyl peroxide, dibutyl peroxide, dicumyl peroxide, t-butylcumyl peroxide, 1,1-bis(t-butylperoxy)cyclohexane and 2,2-bis(t-butylperoxy)butane. Other radical-generating compounds, such as azo compounds, ammonium persulphate and sulphur may also be used.

It is preferred that the composition of the invention should incorporate hardening promoters, particularly alcohols, alcohol ethers, alcohol esters or crown ethers. The alcohols may be monohydric, dihydric or polyhydric.

Specific examples of suitable monohydric alcohols include methanol, ethanol, propanol, isopropanol, butanol, isobutanol, t-butanol and pentanol.

Specific examples of suitable dihydric alcohols include ethylene glycol, propylene glycol, tetramethylene glycol, pentamethylene glycol, hexamethylene glycol, heptamethylene glycol, octamethylene glycol, decamethylene glycol, polybutadienediol, chloropropylene glycol, 3-methylpentanediol, 2,2-diethylpropanediol, 2-ethyl-1,4-butanediol, diethylene glycol, triethylene glycol, polyethylene glycol, dipropylene glycol and polypropylene glycol.

Specific examples of suitable polyhydric alcohols include glycerol, trimethylolmethane, trimethylolethane, trimethylolpropane, and 1,2,6-hexanetriol.

Specific examples of suitable alcohol ethers include propylene glycol methyl ether, dipropylene glycol methyl ether, tripropylene glycol methyl ether, ethylene glycol ethyl ether, ethylene glycol butyl ether, diethylene glycol methyl ether, diethylene glycol ethyl ether, diethylene glycol butyl ether, ethylene glycol phenyl ether, polyoxyethylene lauryl ether and polyoxyethylene nonylphenyl ether.

Examples of suitable alcohol esters include polyethylene glycol monolaurate, polyethylene glycol distearate, glycerol monolaurate, glycerol monostearate, sorbitan monolaurate and polyoxyethylene sorbitan monolaurate.

One of more of the above alcohols, alcohol ethers and alcohol esters may be added to the mixture of the 2-cyanoacrylate and the 1,1-disubstituted diene. The amount of alcohol, alcohol ether or alcohol ester added is preferably from 0.001 to 5 parts by weight, more preferably from 0.05 to 2 parts by weight, per 100 parts by weight of 2-cyano acrylate plus 1,1-disubstituted diene(s). If the amount of alcohol, alcohol ether or alcohol ester is less than 0.001 part by weight, its effect on hardening will be insignificant, on the other hand, if the amount exceed 5 parts by weight, storage stability of the adhesive will sometimes be reduced.

The nomenclature of crown ethers is based on their structural formulae. The most typical cyclic hexamer of ethylene oxide is called 18-crown-6. In this name, the numeral 18 denotes the number of ring numbers, whilst the numeral 6 denotes the number of oxygen atoms. The oxygen atoms of a crown ether are arranged inside the ring and can attach themselves to metal ions or organic ions in a molecule by the formation of coordinate bonds, thereby giving the crown ether its typical properties.

Crown ether analogs in which the oxygen atom of crown ethers are wholly or partly replaced by nitrogen, sulphur, phosphorus or boron atoms (e.g. dithia-15-crown) may also be used. It is also possible to use those anologs in which the ethylene segments of crown ethers are partially replaced by benzo, cyclohexyl, decalyl, naphtho, methylbenzo, butylbenzo, vinylbenzo, butylcyclohexyl, oxocyclohexyl, methylene, trimethylene, tetramethylene or pentamethylene radicals, as well as those analogs in which some of the hydrogen atoms of the ethylene segment have been replaced by substituents such as methyl, ethyl, propyl, butyl, acetyl or phenyl groups or oxygen or fluorine atoms.

Typical examples of crown ethers which can be used as hardening promoters for the compositions of the invention include the following:

(1) 18-Crown-6
(2) Dithia-15-crown
(3) 15-Crown-5
(4) 18-Crown-5
(5) Dibenzo-18-crown-6
(6) Dibenzo-24-crown-8
(7) Dicyclohexyl-18-crown-6
(8) 1,2-Vinylbenzo-15-crown-5.

One or more of these crown ethers may be added to the mixture of the 2-cyanoacrylate and the 1,1-disubstituted diene(s). The amount of crown ether added is preferably from 0.001 to 5 parts by weight, more preferably from 0.05 to 2 parts by weight, per 100 parts by weight of 2-cyanoacrylate plus 1,1-disubstituted diene(s). If the amount of crown ether is less than 0.001 part by weight, its effect on the hardening will be small, on the other hand, if the amount exceeds 5 parts by weight, the storage stability of the adhesive will sometimes be impaired.

The conditions under which the quick-setting adhesive composition of the present invention may be applied and subsequently hardened are similar to those used for conventional cyanoacrylate adhesives. As a general rule, the quick-setting adhesive composition of the present invention is preferably coated onto one side of one of the adherend members. The coated side is brought into contact with an uncoated side of the other member and the adhesive is allowed to spread into a thin layer between the two members whilst both members are firmly held together by finger pressure or by means of a suitable jig; the time for which it is necessary to hold the adherend members together will generally vary from several seconds to several minutes. If necessary, it is possible to hold both uncoated adherend members together in a bonding position and then allow the quick-setting adhesive composition of the invention to penetrate the interface to be bonded. Further promotion of the hardening may be achieved by rubbing the bonding surfaces of the uncoated adherends with a cloth or the like moistened with a weakly anionic polymerization initiator (such as an aqueous solution of sodium hydroxide or a weak amine base) and then apply the adhesive composition, followed by the bonding procedure described above. This pre-treatment of the adherend surfaces is particularly effective when bonding porous materials, such as wood or cardboard. Another effective method of promoting hardening is to pre-heat the uncoated adherend materials to a suitable temperature, e.g. from 40°C to 60°C.

Some of the quick-setting adhesive compositions of the present invention may crystallize at low temperatures. Should this happen, the adhesive composition should be heated before use to melt the crystals or should be applied to adherend materials which have been maintained at a temperature sufficient to melt the crystals upon application of the adhesive composition.

Upon hardening, the quick-setting adhesive composition of this invention seems to be converted into a mixture of a copolymer of the 2-cyanoacrylate with the 1,1-disubstituted diene and homopolymers of the respective components; the diene unit in the polymerizate seems to afford the cross-linking sites, thus contributing to the observed improvement in heat resistance of the adhesive bond.

The quick-setting adhesive composition of the invention is able to bond firmly metals, glass, plastics materials, rubbers and other materials within a period of from several seconds to several minutes in a manner similar to conventional 2-cyanoacrylate adhesives. The bond which is formed may manifest a peel strength as high as 5 to 20 times that of the bond formed by conventional 2-cyanoacrylate adhesives. Moreover, as compared with conventional 2-cyanoacrylate adhesives the composition of the invention provides a bond having much greater heat resistance and chemical resistance. Accordingly, the quick-setting adhesive composition of the invention is able to meet these requirements for a structural quick-setting adhesive.

The invention is further illustrated by reference to the following Examples and the accompanying drawings.

In the drawings:

Figure 1 shows an electron micrograph of a handened adhesive composition according to the present invention;

Figure 2 shows an electron micrograph of a hardened adhesive composition similar to that shown in Figure 1 but outside the scope of the present invention;

Figure 3 represents a peel strength curve of an adhesive composition according to the present invention; and

Figure 4 represents a peel strength curve of aluminium plates adhered to each other by means of an adhesive composition of the present invention.

1,1-Disubstituted dienes for use in the composition of the invention may be synthesized as described in the following Preparation.

PREPARATION

87.7 g of zinc chloride were heated, with stirring, in 351 ml of dioxan. After cooling the mixture to room temperature, 114 ml of ethyl cyanoacetate and 98 ml of acrolein were added. The mixture was then allowed to react at room temperature for 3 hours, after which it was mixed with about 800 ml of petroleum ether and washed three times, each time with 1 litre of cold dilute hydrochloric acid. The organic phase was separated and dried and the solvent was removed, giving 116 g (yield 73%) of 1-carbethoxy-1-cyanobuta-1,3-diene. The product was purified by adding small amounts of *p*-toluenesulphonic acid and *p*-t-buylcatechol and distilling the mixture under reduced pressure (boiling point 66.5°C/2 mmHg).

The following compounds were also synthesized using the procedure described above:

1-carbomethoxy-1-cyanobuta-1,3-diene;
1,1-dicarbethoxybuta-1,3-diene;
1-carboisopropoxy-1-cyanobuta-1,3-diene;
1-carboisobutoxy-1-cyanobuta-1,3-diene; and
1,1-dicyanobuta-1,3-diene.

Examples 1—8 and Comparative
Examples 1—13

Adhesive compositions were prepared by mixing commercial ethyl 2-cyanoacrylate with the 1,1-disubstituted diene shown in Table 1 in the proportions shown in that Table. Each of the resulting adhesive compositions was tested by placing one drop of the adhesive on a test piece prepared as specified in the relevant JIS (Japanese Industrial Standard) or ASTM test described hereafter, placing another test piece over the test piece carrying the adhesive and then pressing both pieces together, under an applied force of 2 kp f. After standing for 24 hours, each test specimen was subjected to the following bonding tests and the results obtained are shown in Table 1.

The peel strength of the adhesive bond was determined in accordance with JIS K-6854. The test piece was an aluminium sheet of thickness 0.1 mm and the T-peel test was used.

The impact strength of the adhesive bond was determined in accordance with ASTM D-950-78 and the material of the test piece was aluminium.

The heat resistance of the adhesive bond was determined by bonding the test pieces together in the same manner as in the tensile test and curing them at room temperature for 24 hours to give test specimens. After standing in a Geer oven at 150°C for 3 hours, the test specimens were tested for bond strength on a Schopper tensile tester provided with a thermostat maintained at 150°C, at a tensile rate of 50 mm/min.

TABLE 1

| | 1,1-Disubstituted diene (1,1-disubstituted diene/ethyl 2-cyanoacrylate weight ratio) | Peel strength (kg/cm) | Impact strength kg.cm/cm$^2$ (kg.cm/in$^2$) | Heat resistance (kg/cm$^2$) |
|---|---|---|---|---|
| Example 1 | 1-Cyano-1-carbomethoxy-butadiene-1,3 (80/20) | 2.05 | 23 ≦ (150≦) | 103 |
| Example 2 | 1-Cyano-1-carbomethoxy-butadiene-1,3 (70/30) | 2.00 | 23 ≦ (150≦) | 96 |
| Comparative Example 1 | 1-Cyano-1-carbomethoxy-butadiene-1,3 (55/45) | 1.93 | 23 ≦ (150≦) | 84 |
| Comparative Example 2 | 1-Cyano-1-carbomethoxy-butadiene-1,3 (40/60) | 0.71 | 23 ≦ (150≦) | 74 |
| Comparative Example 3 | 1-Cyano-1-carbomethoxy-butadiene-1,3 (20/80) | 0.20 | 23 ≦ (150≦) | 68 |
| Comparative Example 4 | 1-Cyano-1-carbomethoxy-butadiene-1,3 (100/0) | 0.10 | 23 ≦ (150≦) | 108 |
| Example 3 | 1-Cyano-1-carboiso-propoxybutadiene-1,3 (90/10) | 1.24 | 23 ≦ (150≦) | 98 |
| Example 4 | 1-Cyano-1-carboiso-propoxybutadiene-1,3 (70/30) | 1.46 | 23 ≦ (150≦) | 95 |
| Comparative Example 5 | 1-Cyano-1-carboiso propoxybutadiene-1,3 (55/45) | 1.02 | 23 ≦ (150≦) | 91 |
| Comparative Example 6 | 1-Cyano-1-carboiso-propoxybutadiene-1,3 (30/70) | 0.28 | 23 ≦ (150≦) | 80 |
| Comparative Example 7 | 1-Cyano-1-carboiso-propoxybutadiene-1,3 (10/90) | 0.22 | 23 ≦ (150≦) | 34 |
| Comparative Example 8 | 1-Cyano-1-carboiso-propoxybutadiene-1,3 (100/0) | 0.46 | 23 ≦ (150≦) | 105 |
| Example 5 | 1-Cyano-1-carbethoxy-butadiene-1,3 (80/20) | 2.31 | 23 ≦ (150≦) | 92 |
| Comparative Example 9 | 1-Cyano-1-carbethoxy-butadiene-1,3 (55/45) | 1.80 | 23 ≦ (150≦) | 85 |
| Example 6 | 1,1-Dicarbethoxy-butadiene-1,3 (60/40) | 2.32 | 23 ≦ (150≦) | 86 |
| Comparative Example 10 | 1,1-Dicyanobutadiene-1,3 (40/60) | 1.32 | 23 ≦ (150≦) | 86 |
| Comparative Example 11 | 1-Cyano-1-carbethoxy-butadiene-1,3 (20/80) | 0.73 | 23 ≦ (150≦) | 76 |
| Comparative Example 12 | 1-Cyano-1-carbethoxy-butadiene-1,3 (5/95) | 0.22 | 7 (46) | 21 |
| Comparative Example 13 | Ethyl 2-cyanoacrylate alone (0/100) | 0.14 | 6.5 (42) | 10 |

TABLE 1

| | 1,1-Disubstituted diene (1,1-disubstituted diene/ethyl 2-cyanoacrylate weight ratio) | Peel strength (kg/cm) | Impact strength kg.cm/cm² (kg.cm/in²) | Heat resistance (kg/cm²) |
|---|---|---|---|---|
| Example 7 | 1-Cyano-1-carbomethoxy-butadiene-1,3/ 1-Cyano-1-carboisopropoxy-butadiene-1,3/ Ethyl 2-cyanoacrylate (30/40/30) | 2.51 | 23 ≦ (150≦) | 168 |
| Example 8 | 1-Cyano-1-carbomethoxy-butadiene-1,3/ 1-Cyano-1-carboethoxy-butadiene-1,3/ ethyl 2-cyanoacrylate (40/40/20) | 2.60 | 23 ≦ (150≦) | 160 |

As can be seen from the test results reported in Table 1, the quick-setting adhesive composition of the present invention has much better heat resistance and peel strength than do conventional 2-cyanoacrylate adhesives. It can also be seen that, where the amount of 1,1-disubstituted diene is below 50% by weight of the composition, the increase in heat resistance is small and the peel strength is decreased.

Example 9

The various materials shown in Table 2 were bonded using the same adhesive composition as was used in Example 1. The results of tests to determine setting time and the tensile strength of the adhesive bond are also shown in Table 2.

The test for setting time was performed in accordance with JIS K-6861 and the test for tensile strength in accordance with JIS K-6861 and JIS K-6849.

The aptitude of the quick-setting adhesive composition of this invention for instantaneous bonding is evident from the results reported in Table 2.

TABLE 2

| Adherend material | Setting time (second) | Tensile strength ($kg/cm^2$) |
|---|---|---|
| Same material | | |
| Nitrile rubber | 3—5 | *33 |
| Nitril rubber | 3—5 | *42 |
| Rigid polyvinyl chloride | 5—10 | *200 |
| Polymethyl methacrylate | 30—90 | *150 |
| Bakelite | 20—40 | *100 |
| Polystyrol | 40—60 | *40 |
| ABS resin | 15—30 | *100 |
| Steel | 20—40 | 160 |
| Copper | 20—30 | 87 |
| Stainless steel | 20—40 | 140 |
| Aluminum | 30—60 | 142 |
| Brass | 20—30 | 150 |
| Glass | 3—5 | *— |
| Wood | 60—120 | *120 |
| Different material | | |
| ABS resin/aluminum | 15—40 | *70 |
| PVC/stainless steel | 5—20 | *140 |
| Nitrile rubber/copper | 3—20 | *38 |
| Aluminum/stainless steel | 30—60 | 155 |
| Steel/glass | 3—20 | *— |

* Cohesive failure in adherend material.

Example 10 and
Comparative Examples 14 and 15

Adhesive compositions were prepared using ethyl 2cyanoacrylate and the 1,1-disubstituted dienes shown in Table 3 in the ratios shown in Table 3. The peel strength of adhesive bonds formed from these compositions were then determined in accordance with JIS K-6854 and the results are shown in Table 3. The test piece was a steel plate of thickness 1.6 mm and the T-peel test was used. The peel strength curve of an adhesive composition was as shown in Figure 3. The peel strength was determined from the load value at B on the curve. In Figure 3, the abnormal peak load at A seemed to be due to the cleavage force when the test specimen was subjected to tension. The ordinate corresponds to the peel strength.

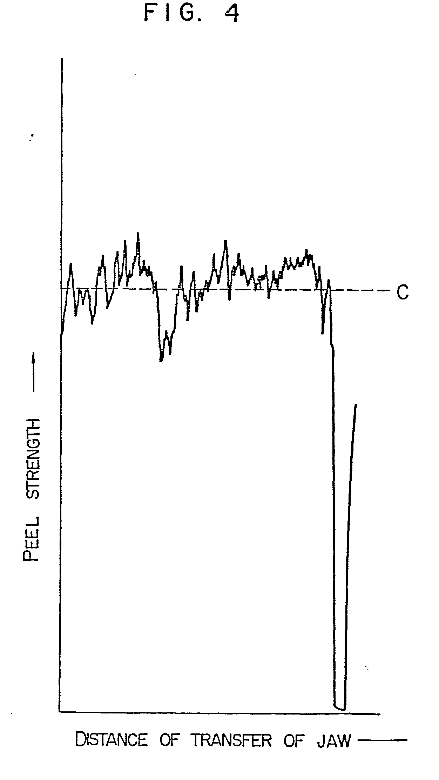

When a thin aluminium sheet of thickness 0.1 mm was used as the material of the test piece, the peel strength curve shown in Figure 4 was obtained. The peel strength calculated by averaging all load values at crests and troughs (shown as C in Figure 4). When the adherend material was sufficiently thick, a peel strength curve of the type shown in Figure 3 was obtained and, in this case, the peel strength was determined from the load value at B.

TABLE 3

| | 1,1-Disubstituted diene (1,1-disubstituted diene/ethyl 2-cyanoacrylate weight ratio) | Peel strength (kg/25 mm) |
|---|---|---|
| Example 10 | 1-Cyano-1-carbomethoxybutadiene-1,3/ ethyl 2-cyanoacrylate (70/30) | 19.5 |
| Comparative Example 14 | 1-Cyano-1-carbomethoxybutadiene-1,3/ ethyl 2-cyanoacrylate (40/60) | 5.0 |
| Comparative Example 15 | Ethyl 2-cyanoacrylate alone (0/100) | 0.1 ≧ |

Examples 11 and 12 and
Comparative Examples 16 and 17

Test specimens were prepared in a manner similar to that described in Example 1 using the adhesive compositions shown in Table 4 and were then immersed in water at 25°C for 7 days. After removal of each test specimen from the water, the tensile shear strength of the adhesive bond was immediately determined in accordance with JIS K-6850. The test results are shown in Table 4, from which it can be seen that the quick-setting adhesive composition of the invention has excellent water resistance.

TABLE 4

| | 1,1-Disubstituted Diene (1,1-disubstituted diene/ethyl 2-cyanoacrylate weight ratio) | Tensile shear strength ($kg/cm^2$) | Tensile shear strength after immersion in water ($kg/cm^2$) |
|---|---|---|---|
| Example 11 | 1-Cyano-1-carboisopropoxybutadiene-1,3/ethyl 2-cyanoacrylate (70/30) | 249 | 220 |
| Example 12 | 1-Cyano-1-carbomethoxybutadiene-1,3/ethyl 2-cyanoacrylate (70/30) | 240 | 210 |
| Comparative Example 16 | 1-Cyano-1-carbomethoxybutadiene-1,3/ ethyl 2-cyanoacrylate (40/60) | 187 | 62 |
| Comparative Example 17 | Ethyl 2-cyanoacrylate alone (0/100) | 132 | 24 |

Examples 13 to 20

Adhesive compositions were prepared as shown in Table 5 and various bonding tests were performed in a manner similar to that described in Examples 1—8. The setting time for the steel-to-steel bond was determined as described in Example 9. The test results are shown in Table 5, which clearly shows the effects of various additives on the performance characteristics of the quick-setting adhesive composition of the invention.

TABLE 5

| Example No. | 1,1-Disubstituted diene (1,1-disubstituted diene/ethyl 2-cyanoacrylate weight ratio) | Additive (added amount, % by weight) | Tensile shear strength ($kg/cm^2$) | Peel strength (kg/cm) | Impact strength $kg.cm/cm^2$ ($kg.cm/in^2$) | Setting time (second) |
|---|---|---|---|---|---|---|
| 13 | 1-Cyano-1-carbethoxy-butadiene-1,3/ethyl 2-cyanoacrylate (70/30) | Methyl alcohol (0.1) | 178 | 2.48 | 23 ≦ (150≦) | 3—5 |
| 14 | 1-Cyano-1-carbethoxy-butadiene-1,3/ethyl 2-cyanoacrylate (70/30) | Ethylene glycol (0.1) | 180 | 2.50 | 23 ≦ (150≦) | 8—10 |
| 15 | 1-Cyano-1-carbethoxy-butadiene-1,3/ethyl 2-cyanoacrylate (70/30) | 18-Crown-6-ether (0.1) | 165 | 2.50 | 23 ≦ (150≦) | 5—10 |
| 16 | 1-Cyano-1-carbethoxy-butadiene-1,3/ethyl 2-cyanoacrylate (70/30) | 15-Crown-5-ether (0.1) | 198 | 2.52 | 23 ≦ (150≦) | 3—5 |
| 17 | 1-Cyano-1-carbethoxy-butadiene-1,3/ethyl 2-cyanoacrylate (70/30) | 15-Crown-5-ether (0.03) | 180 | 2.38 | 23 ≦ (150≦) | 5—10 |
| 18 | 1-Cyano-1-carbethoxy-butadiene-1,3/ethyl 2-cyanoacrylate (70/30) | γ-Butyrolactone (5) | 270 | 2.60 | 23 ≦ (150≦) | 20—40 |
| 19 | 1-Cyano-1-carbethoxy-butadiene-1,3/ethyl 2-cyanoacrylate (70/30) | β-Propiolactone (5) | 293 | 2.60 | 23 ≦ (150≦) | 20—40 |
| 20 | 1-Cyano-1-carbethoxy-butadiene-1,3/ethyl 2-cyanoacrylate (70/30) | — | 180 | 2.20 | 23 ≦ (150≦) | 20—40 |

**Claims**

1. A quick-setting adhesive composition comprising a 2-cyanoacrylate and at least one 1,1-disubstituted diene of formula

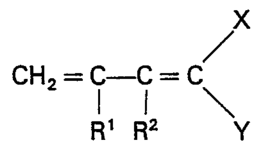

(in which:

$R^1$ represents a hydrogen atom, an alkyl group having from 1 to 5 carbon atoms, an aryl group, an aralkyl group or a halogen atom;

$R^2$ represents a hydrogen atom or an alkyl group having from 1 to 5 carbon atoms; and

X and Y are the same or different and each represents a cyano group, a carboxylate group having the formula ROOC— [in which R represents an alkyl group], an ethylsulphone group, a phenylsulphone group or a diethylphosphonyl group),

the total weight of said diene or dienes being from 60 to 95% by weight and the weight of said 2-cyanoacrylate being from 40 to 5% by weight, both based on the total weight of said 2-cyanoacrylate and said diene or dienes.

2. A composition according to Claim 1, wherein, in said, 1,1-disubstituted diene:

$R^1$ represents a hydrogen atom or an alkyl group having 1 or 2 carbon atoms;

$R^2$ represents a hydrogen atom;

X represents a cyano group; and

Y represents a carboxylate group, an ethylsulphone group or a diethylphosphonyl group.

3. A composition according to Claim 1, wherein said diene is one or more of the compounds:

1-carbomethoxy-1-cyanobuta-1,3-diene;

1-carbethoxy-1-cyanobuta-1,3-diene;

1-carboisopropoxy-1-cyanobuta-1,3-diene; and

1,1-dicarbethoxybuta-1,3-diene.

4. A composition according to any one of Claims 1 to 3, wherein said 2-cyanoacrylate is ethyl 2-cyanoacrylate.

5. A composition according to any one of Claims 1 to 4, wherein the amount of said 1,1-disubstituted diene or dienes is from 65 to 85% by weight and the amount of said 2-cyanoacrylate is from 35 to 15% by weight, based on the total weight of said 2-cyanoacrylate and said diene or dienes.

6. A composition according to any one of Claims 1 to 5, additionally containing one or more lactones, alcohols, alcohol ethers, alcohol esters or crown ethers.

7. A composition according to Claim 6, in which the amount of said lactone is from 0.1 to 30 parts by weight per 100 parts by weight of total 2-cyanoacrylate and 1,1-disubstituted diene or dienes.

8. A composition according to Claim 7, in which said amount of said lactone is from 0.5 to 10 parts by weight.

9. A composition according to Claim 6, in which the amount of said alcohol, alcohol ether or alcohol ester is from 0.001 to 5 parts by weight per 100 parts by weight of total 2-cyanoacrylate and 1,1-disubstituted diene or dienes.

10. A composition according to Claim 9, in which said amount of said alcohol, alcohol ether or alcohol ester is from 0.05 to 2 parts by weight.

11. A composition according to Claim 6, in which the amount of said crown ether is from 0.0001 to 5 parts by weight of total 2-cyanoacrylate and 1,1-disubstituted diene or dienes.

12. A composition according to Claim 11, in which said amount of said crown ether is from 0.0001 to 1 part by weight.

**Revendications**

1. Composition adhésive à prise rapide comprenant un 2-cyanoacrylate et au moins un diène 1,1-disubstitué de formule

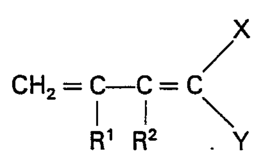

(dans laquelle:

$R^1$ représente un atome d'hydrogène, un groupe alkyle ayant de 1 à 5 atomes de carbone, un

groupe aryle, un groupe aralkyle ou un atome d'halogène;

$R^2$ représente un atome d'hydrogène ou un groupe alkyle ayant de 1 à 5 atomes de carbone; et

X et Y sont identiques ou différents et représentent chacun un groupe cyano, un groupe carboxylate ayant pour formule ROOC— (dans laquelle R représente un groupe alkyle), un groupe éthylsulfone, un groupe phénylsulfone ou un groupe diéthylphosphonyle),

le poids total du ou desdits diènes étant de 60 à 95% en poids et le poids dudit 2-cyanoacrylate étant de 40 à 5% en poids, tous deux par rapport au poids total du 2-cyanoacrylate et du ou des diène(s).

2. Une composition selon la revendication 1 dans laquelle dans le diène 1,1-disubstitué:

$R^1$ représente un atome d'hydrogène ou un groupe alkyle ayant 1 ou 2 atomes de carbone;

$R^2$ représente un atome d'hydrogène;

X représente un groupe cyano; et

Y représente un groupe carboxylate, un groupe éthylsulfone ou un groupe diéthylphosphonyle.

3. Composition selon la revendication 1, caractérisée en ce que le diène est un ou plusieurs des composés:

1-carbométhoxy-1-cyanobuta-1,3-diène;

1-carbéthoxy-1-cyanobuta-1,3-diène;

1-carboisopropoxy-1-cyanobuta-1,3-diène; et

1,1dicarbéthoxybuta-1,3-diène.

4. Composition selon l'une quelconque des revendications 1 à 3, caractérisée en ce que le 2-cyanoacrylate est le 2-cyanoacrylate d'éthyle.

5. Composition selon l'une quelconque des revendications 1 à 4, caractérisée en ce que la quantité de la ou desdit(s) diène(s) est comprise entre 65 et 85% en poids et la quantité du 2-cyanoacrylate est comprise entre 35 et 15% en poids, par rapport au poids total du 2-cyanoacrylate et du ou des dit(s) diène(s).

6. Composition selon l'une quelconque des revendications 1 à 5, contenant en plus un ou plusieurs lactones, alcools, éthers alcools, esters alcools ou éthers couronne.

7. Composition selon la revendication 6, dans laquelle la quantité de la lactone est comprise entre 0,1 et 30 parties en poids pour 100 parties en poids du total du 2-cyanoacrylate et du ou des diène(s) 1,1-disubstitué(s).

8. Composition selon la revendication 7, dans laquelle la quantité de la lactone est comprise entre 0,5 et 10 parties en poids.

9. Composition selon la revendication 6, dans laquelle la quantité dudit alcool, éther alcool ou ester alcool est comprise entre 0,001 et 5 parties en poids pour 100 parties en poids du total du 2-cyanoacrylate et du ou des diène(s) disubstitué(s).

10. Composition selon la revendication 9, dans laquelle la quantité dudit alcool, éther alcool ou ester alcool est comprise entre 0,05 et 2 parties en poids.

11. Composition selon la revendication 6, dans laquelle la quantité de l'éther couronne est comprise entre 0,0001 et 5 parties en poids du total du 2-cyanoacrylate et du ou des diène(s) 1,1-disubstitué(s).

12. Composition selon la revendication 11, dans laquelle la quantité d'éther couronne est comprise entre 0,0001 et 1 partie en poids.

**Patentansprüche**

1. Eine schnell haftende Klebstoffzusammensetzung, enthaltend ein 2-Cyanoacrylat und mindestens ein 1,1-disubstituiertes Dien der Formel

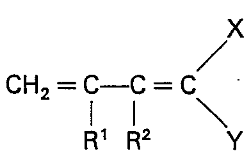

(in der

$R^1$ ein Wasserstoffatom, eine Alkylgruppe mit von 1 bis 5 Kohlenstoffatomen, eine Arylgruppe, eine Arylalkylgruppe oder ein Halogenatom darstellt;

$R^2$ ein Wasserstoffatom oder eine Alkylgruppe mit von 1 bis 5 Kohlenstoffatomen bedeutet; und

X und Y gleich oder verschieden sind und je eine Cyanogruppe, eine Carboxylatgruppe der Formel ROOC— ⟨in der R eine Alkylgruppe bedeutet⟩, eine Ethylsulfongruppe, eine Phenylsulfongruppe oder eine Diethylphosphonlygruppe darstellen),

wobei das Gesamtgewicht des genannten Dienes oder der Diene von 60 bis 95 Gewichtsprozent und das Gewicht des genannten 2-Cyanoacrylats von 40 bis 5 Gewichtsprozent beträgt, beide bezogen auf das Gesamtgewicht des genannten 2-Cyanoacrylats und des genannten Diens oder der Diene.

2. Eine Zusammensetzung gemäß Anspruch 1, in der in dem genannten Dien:

$R^1$ ein Wasserstoffatom oder eine Alkylgruppe mit 1 oder 2 Kohlenstoffatomen bedeutet;
$R^2$ ein Wasserstoffatom darstellt;
X eine Cyanogruppe bedeutet; und
Y eine Carboxylatgruppe, eine Ethylsulfongruppe oder eine Diethylphosphonylgruppe darstellt.

3. Eine Zusammensetzung gemäß Anspruch 1, in der das genannte Dien eine oder mehrere der folgenden Verbindungen ist:
1-Carbomethoxy-1-cyanobuta-1,3-dien;
1-Carboethyoxy-1-cyanobuta-1,3-dien;
1-Carboisopropoxy-1-cyanobuta-1,3-dien; und
1,1Dicarbethoxybuta-1,3-dien.

4. Eine Zusammensetzung gemäß einem der Ansprüche 1 bis 3, in der das genannte 2-Cyanoacrylat Ethyl-2-cyanoacrylat ist.

5. Eine Zusammensetzung gemäß einem der Ansprüche 1 bis 4, in der die Menge des genannten 1,1-disubstituierten Diens oder der Diene von 65 bis 85 Gewichtsprozent und die Menge des genannten 2-Cyanoacrylats von 35 bis 15 Gewitchsprozent beträgt, bezogen auf das Gesamtgewicht des genannten 2-Cyanoacrylats und des genannten Diens oder der Diene.

6. Eine Zusammensetzung gemäß einem der Ansprüche 1 bis 5, zusätzlich ein oder mehrere Lactone, Alkohole, Alkoholether, Alkoholester oder Kronenether enthaltend.

7. Eine Zusammensetzung gemäß Anspruch 6, in der die Menge des genannten Lactons von 0,1 bis 30 Gewichtsteile je 100 Gewichtsteile der Gesamtmenge an 2-Cyanoacrylat und 1,1-disubstituierten Dien oder Dienenbeträgt.

8. Eine Zusammensetzung gemäß Anspruch 7, in der die genannte Menge des genannten Lactons von 0,5 bis 10 Gewichtsteile beträgt.

9. Eine Zusammensetzung gemäß Anspruch 6, in der die Menge des genannten Alkohols, Alkoholethers oder Alkoholesters von 0,001 bis 5 Gewichtsteile je 100 Gewichtsteile der Gesamtmenge an 2-Cyanoacrylat und 1,1-disubstituierten Dien oder Dienen beträgt.

10. Eine Zusammensetzung gemäß Anspruch 9, in der die genannte Menge des genannten Alkohols, Alkoholethers oder Alkoholesters von 0,05 bis 2 Gewichtsteile beträgt.

11. Eine Zusammensetzung gemäß Anspruch 6, in der die Menge des genannten Kronenethers von 0,0001 bis 5 Gewichtsteile der Gesamtmenge an 2-Cyanoacrylat und 1,1-disubstituierten Dien oder Dienen beträgt.

12. Eine Zusammensetzung gemäß Anspruch 11, in der die genannte Menge des genannten Kronenethers von 0,0001 bis 1 Gewichtsteil beträgt.

FIG. 1

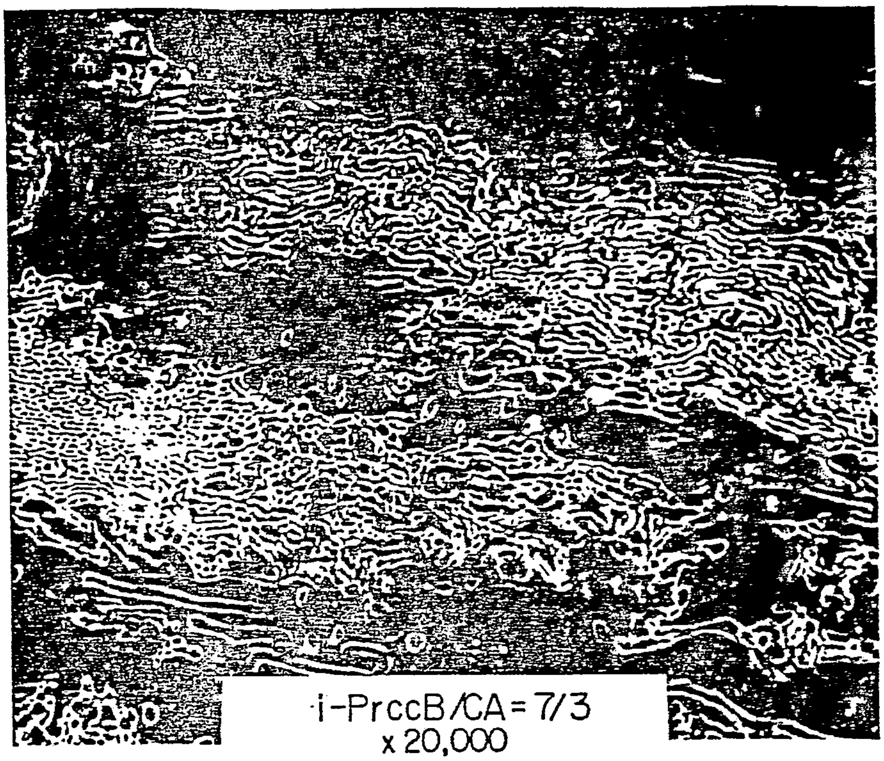

i-PrccB/CA = 7/3
x 20,000

FIG. 2

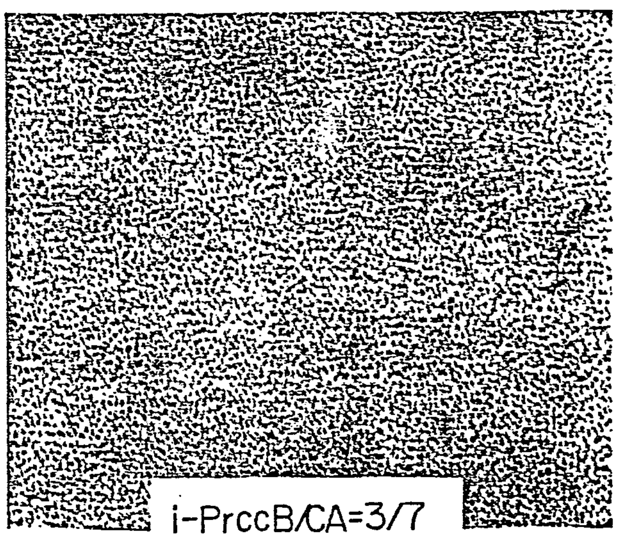

i-PrccB/CA=3/7
x 20,000

FIG. 3

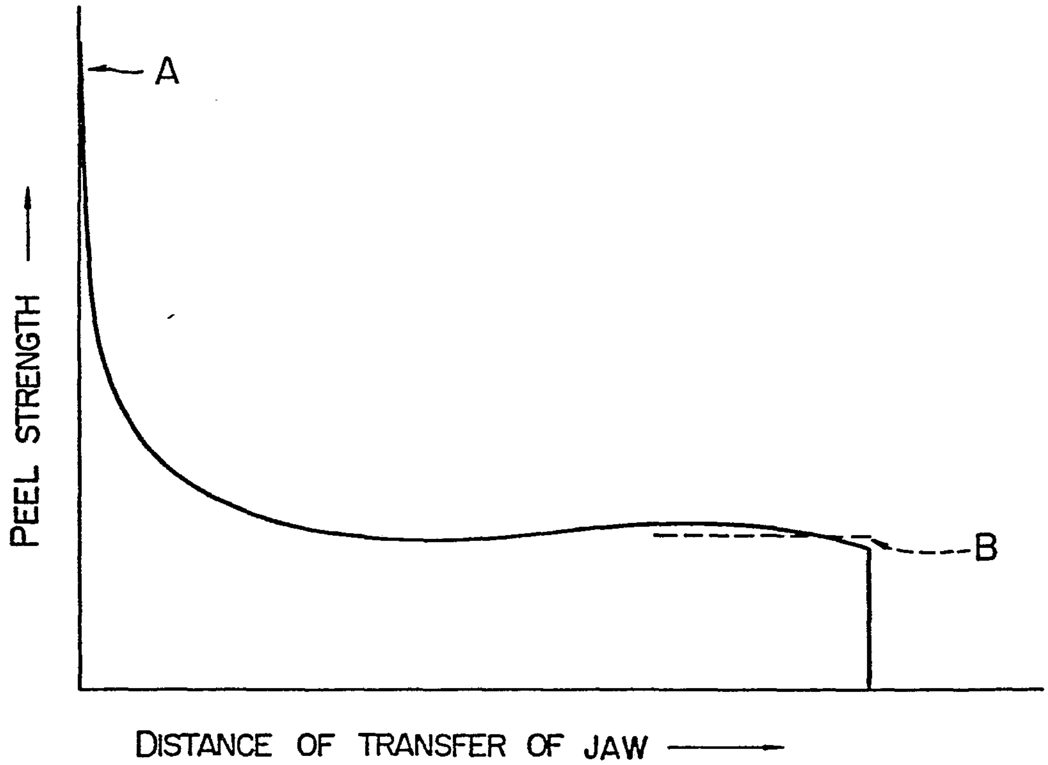

FIG. 4